# EUROPÄISCHE PATENTANMELDUNG

(11) **EP 2 200 101 A1**
(43) Veröffentlichungstag der Anmeldung: **23.06.2010**
(21) Anmeldenummer: 08022231.8
(22) Anmeldetag: 22.12.2008
(51) Int. Cl.: H01L 41/09

(54) **Ultraschallmotor**

(71) Anmelder: Physik Instrumente (PI) GmbH & Co. KG, 76228 Karlsruhe (DE)
(72) Erfinder: Thelen, Marc, 76133 Karlsruhe (DE); Sayer, Jürgen, 77815 Bühl (DE)

(57) **Zusammenfassung**

Die Erfindung betrifft einen Ultraschallmotor mit einem Gehäuse und zumindest einem in dem Gehäuse angeordneten Oszillator (3) in Form einer piezoelektrischen Platte mit wenigstens zwei Seitenflächen, wenigstens zwei Stirnflächen und wenigstens zwei Hauptflächen wobei an einer der Seitenflächen des Oszillators mindestens ein Friktionselement (7) zum Bewegen eines Abtriebselements und an der gegenüberliegenden Seitenflache zwischen dem Gehäuse und dem Oszillator wenigstens ein elastisches Element (8) zum elastischen Anpressen des mindestens einen Friktionselements an das Abtriebselement angeordnet ist. Der Oszillator Stützt sich an einer seiner Stirnflächen über ein Führungselement (9) starr am Gehäuse und an der gegenüberliegenden Stirnfläche über wenigstens ein Federelement (10) elastisch am Gehäuse ab.

## Beschreibung

Die vorliegende Erfindung betrifft einen Ultraschallmotor mit einem Gehäuse und zumindest einem in dem Gehäuse angeordneten Oszillator in Form einer piezoelektrischen Platte mit wenigstens zwei Seitenflächen, wenigstens zwei Stirnflächen und wenigstens zwei Hauptflächen, wobei an einer der Seitenflächen des Oszillators mindestens ein Friktionselement zum Bewegen eines Abtriebselements und an der gegenüberliegenden Seitenfläche zwischen dem Gehäuse und dem Oszillator wenigstens ein elastisches Element zum elastischen Anpressen des mindestens einen Friktionselements an das Abtriebselement angeordnet ist.

Derartige Ultraschallmotoren können beispielsweise in hochpräzisen technologischen Ein, Zwei- oder Dreikoordinatentischen, in hochpräzisen Mikroskoptischen, in hochpräzisen optischen Systemen wie z. B. in Objektiven hochpräziser Fotoapparate oder in geophysikalischen Geräten verwendet werden.

Der Halterung des Oszillators solcher Ultraschallmotoren kommt eine entscheidende Bedeutung zu. Diese hat einen signifikanten Einfluss u.a. auf die Geschwindigkeit, Effizienz, Steifigkeit und Hystese des gesamten Antriebs.

Aus der Druckschrift US 5,872,418 sind Ultraschallmotoren bekannt, in denen der Ultraschalloszillator mit Hilfe von Gummihaltern gehalten wird (Halter 8 in den Fig. 32, 34 und 35 der obigen Druckschrift). Derartige Motoren zeichnen sich durch eine einfache Montagetechnologie und niedrige Herstellungskosten aus, jedoch lassen sie keine hohen Positionierungsgenauigkeiten zu. Der Gummihalter bestimmt die niedrige Motorsteifigkeit. Überdies hat der Gummihalter eine Hysterese, die den Empfindlichkeitsbereich des Motors bestimmt. Sowohl die Motorsteifigkeit, als auch die Hysterese der Gummihalter begrenzt die Positionierungsgenauigkeit derartiger Ultraschallmotoren. Die Positionierungsgenauigkeit beträgt hierbei etwa 5 - 10 µm. In vielen Fällen reicht diese Genauigkeit nicht aus.

Aus der Druckschrift US 6,979,934 ist ferner ein Ultraschallmotor bekannt, bei dem der Ultraschalloszillator durch einen doppelten Metallrahmen gehalten wird (Fig. 3, 5, 7 der obigen Druckschrift). Die Rahmen werden mit Epoxydharzkleber auf die Zylinderoberfläche des Motors aufgeklebt. Ein solcher Motor besitzt aufgrund einer hohen Motorsteifigkeit und einer geringen Hysterese eine hohe Positionierungsgenauigkeit, die im Bereich von 0,1 µm liegt. Der Motor weist jedoch den Nachteil auf, dass seine Montage eine präzise Verklebung der Doppelrahmen an den Oszillator erfordert. Dieser Arbeitsgang erfolgt manuell, was den Motor verteuert.

Des Weiteren ist aus der Druckschrift US 2003/005 25 73 A1 ein Ultraschallmotor bekannt, bei dem sich der als piezoelektrische Platte ausgeführte Ultraschalloszillator in einem ersten Gehäuseteil befindet, das zwei Anschläge aufweist, zwischen denen der Oszi-Ilator im Wesentlichen starr eingespannt ist. Durch die im Wesentlichen starre Einspannung des Oszillators ergibt sich eine sehr geringe Dämpfung der Schwingungen desselben, d.h. es liegt ein System mit hoher mechanischer Güte vor. Der wesentliche Nachteil dieses Motors besteht darin, dass für die hochpräzise Positionierung der Oszillator fest im ersten Gehäuseteil fixiert sein muss. Die Toleranzen der Oszillatorabmessungen im ersten Gehäuseteil müssen immer garantieren, dass kein Spalt zwischen den Anschlägen und den Stirnflächen des Oszillators vorhanden ist. Bereits das Auftreten eines kleinen Spaltes verschlechtert die Positionierungsgenauigkeit um die entsprechende Spaltgröße. Gleichzeitig darf der Oszillator nicht stark zwischen den Anschlägen eingespannt werden. Das Einklemmen des Oszillators zwischen den Anschlägen führt zum Auftreten von Verlusten zwischen dem Oszillator und den Anschlägen und zur Erhöhung der in das Motorgehäuse gelangenden akustischen Energie, die wiederum zur Motorerwärmung und zu verstärkten Motorgeräuschen führt. Außerdem verringert das Klemmen des Oszillators wesentlich seine effektive Güte. Die damit verbundene Verschlechterung der Stabilität des Motors bei Last- und Temperaturänderungen schließt den Betrieb des Motors in selbsterregenden Generatorschaltungen aus.

Zur Gewährleistung einer Positionierungsgenauigkeit von 0,01 µm uss der Oszillator des Motors eine positive Toleranz von 2 - 5 µm, bezogen auf die Anschläge des Gehäuses, haben. Eine kleinere Toleranz führt zum Auftreten eines Spaltes, was seinerseits zur Verringerung der Positionierungsgenauigkeit führt. Bei einer großen Toleranz wird der Oszillator stark durch die Anschläge zusammengepresst und kann sich dadurch zwischen ihnen verklemmen. Daher ist die Einhaltung entsprechender Toleranzen enorm wichtig. Bei einer Massenfertigung ist es jedoch sehr schwierig, genaue Toleranzen zu gewährleisten. Die Einhaltung genauer Toleranzen führt zudem zu höheren Herstellungskosten für solche Ultraschallmotoren.

In diesem Zusammenhang ist zu erwähnen, dass auch die Gehäusetemperatur Einfluss auf die Klemm- bzw. Haltesituation des Oszillators hat. So kann eine Verringerung der Gehäusetemperatur zum unzulässigen Zusammenpressen des Oszillators führen, während die Erhöhung der Gehäusetemperatur zum Auftreten eines Spaltes führen kann, was wiederum den Verlust an Genauigkeit nach sich zieht. Aus diesem Grund können derartige Ultraschallmotoren nicht in hochpräzisen Geräten eingesetzt werden, die entsprechenden äußeren Umgebungseinflüssen ausgesetzt sind.

Das Ziel der vorliegenden Erfindung besteht deshalb darin, die Technologie zur Herstellung von hochpräzisen Ultraschallmotoren für eine kostengünstige Massenfertigung zu vereinfachen bzw. die Reproduzierbarkeit bei der Fertigung solcher Motoren zu erhöhen, und zugleich einen Ultraschallmotor bereitzustellen, der selbst bei hoher Geschwindigkeit gute Steifigkeits- und Hysteresewerte bei akzeptablen Dämpfungsverlusten und damit eine hohe Positionierungsgenauigkeit erreicht.

Der vorliegenden Erfindung liegt daher die Aufgabe zugrunde, einen hochpräzisen Ultraschallmotor der eingangs genannten Art derart weiterzubilden, dass die aus dem Stand der Technik bekannten und oben diskutierten Probleme und Nachteile reduziert oder sogar vermieden werden und insbesondere einen hochpräzisen Ultraschallmotor mit neuen vorteilhaften Eigenschaften bereitzustellen, der sich vergleichweise einfach realisieren lässt.

Diese Aufgabe wird erfindungsgemäß gelöst durch einen hochpräzisen Ultraschallmotor der eingangs genannten Art, bei dem sich der Oszillator an einer seiner Stirnflächen über ein Führungselement starr am Gehäuse abstützt, und sich der Oszillator an der gegenüberliegenden Stirnfläche über wenigstens ein Federelement elastisch am Gehäuse abstützt.

Durch diese Art der Halterung ist es nicht erforderlich, dass bei der Fertigung des Motors engste Toleranzen eingehalten werden, da die einseitige elastische Abstützung über ein Federelement Fertigungstoleranzen ausgleichen kann. Obwohl zwar durch die einseitige elastische Halterung die Dämpfung der akustischen Schwingungen angehoben wird, ist durch die zugleich starre Abstützung auf der gegenüberliegenden Stirnfläche die Dämpfung des gesamten Systems akzeptabel. Eine starre Abstützung bedeutet in diesem Zusammenhang, dass bei den im Betrieb üblicherweise auftretenden Kräften in Richtung des Führungselements dieses nahezu unnachgiebig bleibt, und somit einen hohen DruckE-Modul aufweist. Im Gegensatz hierzu handelt es sich bei einer elastischen Abstützung um eine Abstützung mit hoher Nachgiebigkeit und entsprechend geringem Druck-E-Modul.

Es kann von Vorteil sein, dass das Führungselement gleitend gegenüber dem Gehäuse angeordnet ist. Dadurch ist gewährleistet, dass der Oszillator nahezu ungehindert Bewegungen in einer Richtung ausführen kann, die im Wesentlichen senkrecht zu der Richtung ist, in der sich der Oszillator an seinen Stirnflächen abstützt. Dies ist insbesondere von Bedeutung für den Fall eines Verschleißes am Friktionselement, d.h. dem Abtragen von Material am Friktionselement und der damit verbundenen Verringerung seiner Ausdehnung. Ohne die Möglichkeit des Nachrückens des Oszillators in Richtung des Abtriebselements würde es zu signifikanten Einbußen bei der Effizient des Motors kommen.

Ebenso kann es von Vorteil sein, dass das Führungselement den Oszillator zumindest teilweise umgreift. Hierdurch ist eine sichere Befestigung des Führungselements am Oszillator gegeben.

Zudem kann es von Vorteil sein, dass das Führungselement einteilig oder mehrteilig ist. Dies erweitert die konstruktiven Möglichkeiten hinsichtlich der Ausgestaltung des Ultraschallmotors.

Weiterhin kann es von Vorteil sein, dass das Führungselement einteilig ist und eine im Wesentlichen U-förmige Querschnittsgeometrie aufweist. Hierbei handelt es sich um eine besonders einfach und kostengünstig zu realisierende Form des Führungselements.

Es kann günstig sein, dass das Führungselement zweiteilig ist, und jedes der beiden Teile des Führungselements eine im Wesentlichen U-förmige Querschnittsgeometrie aufweist.

Hierbei dient ein U-förmiger Teil des Führungselements zur Aufnahme des zweiten U-förmigen Teils des Führungselements, in dessen Aussparung der Oszillator eingreift. Es ist dabei vorgesehen, dass der Teil des Führungselements, der mit dem Oszillator in Kontakt steht, gegen den anderen Teil des Führungselements gleitend verschiebbar ist, wobei sich der andere Teil des Führungselements am Gehäuse abstützt. Somit ist bei dieser Ausführungsform ein Gleiten des Führungselements gegenüber dem Gehäuse nicht beabsichtigt, sondern nur ein Gleiten der beiden Teile des Führungselements gegeneinander. Bei geeigneter Werkstoffauswahl der beiden Teile des Führungselements können hierbei sehr günstige tribologische Eigenschaften erzielt werden.

Ebenso kann es günstig sein, dass sich zwischen dem wenigstens einen Federelement und dem Oszillator ein Halteelement befindet. Hierdurch ist eine sichere Halterung des Oszillators gewährleistet. Zudem erlaubt das Halteelement eine einfache Befestigung bzw. Halterung des Federelements oder der Federelemente.

Außerdem kann es günstig sein, dass das Halteelement einteilig oder mehrteilig ist. Dies erweitert die konstruktiven Möglichkeiten hinsichtlich der Ausgestaltung des Ultraschallmotors.

Weiterhin kann es günstig sein, dass das Halteelement im Wesentlichen die gleiche Geometrie wie das Führungselement aufweist. Dies erleichtert und vereinfacht die Herstellung des Ultraschallmotors.

Es kann vorteilhaft sein, dass das wenigstens eine elastische Element und/oder das wenigstens eine Federelement eine Spiralfeder aufweist. Dadurch gelingt auf besonders einfache Weise die Realisierung des Ultraschallmotors.

Ebenso kann es vorteilhaft sein, dass das Führungselement und das Halteelement einstückig miteinander ausgebildet sind. Dadurch ergibt sich eine Reduzierung der Bauteile des Ultraschallmotors und demzufolge eine einfachere Möglichkeit der Montage.

Darüber hinaus kann es vorteilhaft sein, dass das Führungselement und/oder das Halteelement einen polymeren Werkstoff, vorzugsweise einen thermoplastischen Kunststoff, aufweisen bzw. aufweist. Diese Werkstoffe, beispielsweise Polyetheretherketon, Polyamid, Polyoxymethylen oder Polyphenylensulfid, lassen sich vergleichweise einfach auch in komplizierte Geometrien formen. Zudem haben sie vielfach günstige tribologische Eigenschaften, d.h. sie weisen einen niedrigen Reibungskoeffizienten im Kontakt mit anderen Materialien auf. Um den Reibungskoeffizienten weiter herabzusetzen und/oder die Verschleißbeständigkeit zu erhöhen, kann der polymere Werkstoff auch entsprechend modifiziert sein, z.B. mit Partikeln und/oder Fasern gefüllt sein. Als Partikel sind hierbei Materialien wie Polytetrafluorethylen, Graphit, Molybdändisulfid, Zinksulfid oder Bariumsulfat denkbar. Als Fasern können Materialien wie Glas, Aramid oder Kohlenstoff Verwendung finden.

Außerdem kann es vorteilhaft sein, dass das mindestens eine Friktionselement stoffschlüssig mit dem Oszillator verbunden und vorzugsweise mit diesem verklebt ist. Dies erweitert die Möglichkeiten zur Herstellung des Ultraschallmotors.

Es kann sich als günstig erweisen, das Verhältnis von der zum Kontakt mit dem Abtriebselement vorgesehenen Kontaktfläche zur Grundfläche des mindestens einen Friktionselements kleiner oder gleich 1:50 ist. Als Grundfläche ist hierbei die Fläche des Friktionselements bezeichnet, die sich in Anlage mit dem Oszillator befindet. Durch die nur sehr geringe Kontaktfläche resultiert ein zuverlässigerer Antrieb des Ultraschallmotors.

Zudem kann es sich als günstig erweisen, dass die Kontaktfläche bis zu einer durch den Betrieb bedingten Abnahme der Höhe H des Friktionselements von 10% im Wesentlichen gleich bleibt. Dadurch ergeben sich auch über sehr lange Zeiträume nahezu gleichbleibende Betriebsbedingungen.

Hierbei kann es sich als günstig erweisen, dass das mindestens eine Friktionselement spezielle geometrische Formen und Ausgestaltungen aufweist. So kann es günstig sein, dass das Friktionselement in Blickrichtung einer der Hauptflächen des Oszillators eine im Wesentlichen dreiecksförmige Geometrie aufweist, oder dass das Friktionselement wenigstens zwei konkav gekrümmte Seitenflächen aufweist, wobei es vorteilhaft sein kann, dass sich die konkav gekrümmten Seitenflächen in Richtung der Kontaktfläche stetig verjüngen ,oder aber dass das Friktionselement zwei im Wesentlichen senkrechte ebene Seitenflächen, zwei geneigte ebene Seitenflächen und zwei konkav gekrümmte Seitenflächen aufweist. Sämtliche der vorgenannten vorteilhaften Ausführungsformen in Bezug auf die Geometrie des Friktionselements wirken sich positiv auf gleichmäßige Betriebsbedingungen bzw. gleichbleibende Funktion des Ultraschallmotors aus.

Es kann von Vorteil sein, dass das mindestens eine Friktionselement einen keramischen Werkstoff aufweist und vorzugsweise aus diesem besteht, oder aber dass das mindestens eine Friktionselement wenigsten abschnittsweise mit einem keramischen Werkstoff beschichtet ist. Dadurch erhält das Friktionselement eine hohe Verschleißbeständigkeit, d.h. der Abrieb des Friktionselements während des Betriebs des Ultraschallmotors bleibt dadurch sehr gering.

Schließlich kann es von Vorteil sein, dass das mindestens eine Friktionselement einstükkig mit dem Oszillator ausgeführt ist. Dies verringert u.a. die Anzahl der Fertigungsschritte zur Herstellung des Ultraschallmotors.

Die Erfindung beschränkt sich nicht nur auf die einzelnen zuvor aufgeführten vorteilhaften Ausführungsformen und sämtlicher möglicher Kombinationen hiervon, sondern auch auf Kombinationen von Teilmerkmalen aus verschiedenen der oben aufgeführten vorteilhaften Ausführungsformen.

Die Erfindung wird nachfolgend anhand von Ausführungsbeispielen unter Zuhilfenahme von Figuren näher erläutert.

### Es zeigen:

- Fig. 1: Schematische Darstellungen (Darstellungen 1 bis 4) einer Ausführungsform des Ultraschallmotors mit einteiligem Führungselement und einteiligem Halteelement
- Fig. 2: Schematische Darstellungen (Darstellungen 5 bis 8) einer weiteren Ausführungsform des Ultraschallmotors mit zweiteiligem Führungselement und zweiteiligem Halteelement
- Fig. 3: Schematische Darstellung einer Ausführungsform des Friktionselements

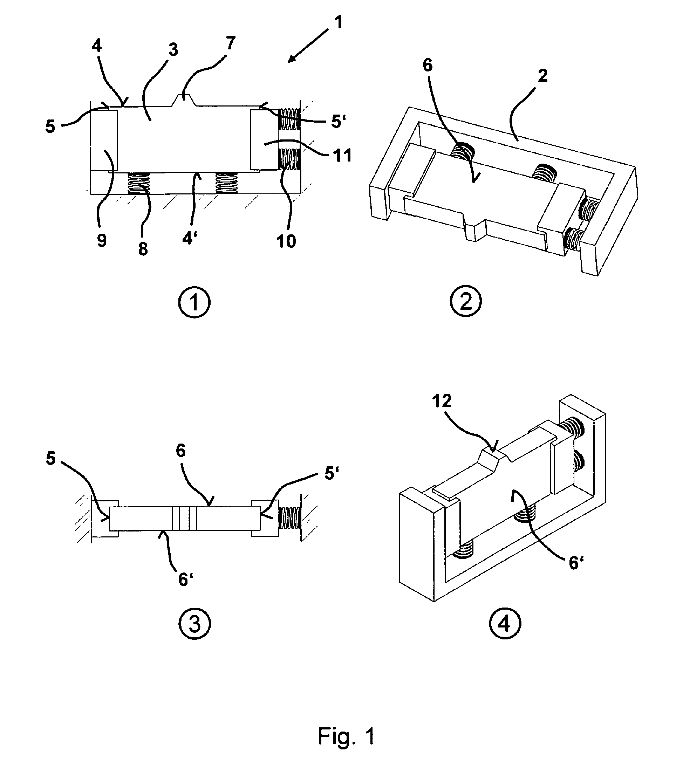

Fig. 1 zeigt in den Darstellungen 1 bis 4 eine erste mögliche Ausführungsform des Ultraschallmotors 1. Hierbei ist der Oszillator 3 in Form einer piezoelektrischen Platte in einem im Wesentlichen U-förmigen Gehäuse 2 angeordnet. An einer Seitenfläche 4 des Oszillators 3 befindet sich ein Friktionselement 7, welches einstückig mit der piezoelektrischen Platte des Oszillators 3 ausgeführt ist. Das Friktionselement 7 ist dazu vorgesehen, die Bewegung des durch elektrische Spannungsbeaufschlagung in Schwingungen versetzten Oszillators 3 auf ein in Fig. 1 nicht dargestelltes Abtriebselement durch entsprechendes Angreifen an diesem zu übertragen. An der gegenüberliegenden Seitenfläche 4' stützt sich der Oszillator 3 über zwei elastische Elemente 8 in Form von Spiralfedern am Gehäuse 2 ab. An Stelle einer Spiralfeder kann beispielsweise auch ein gummielastisches Element verwendet werden. Zudem ist denkbar, dass bei Verwendung von Spiralfedern diese eine über die Höhe veränderliche Form aufweisen, und beispielsweise konisch geformt sind.

An einer Stirnfläche 5 stützt sich der Oszillator über ein Führungselement 9 am Gehäuse 2 ab. Das Führungselement 9 besteht hierbei aus tribologisch optimiertem Polyetheretherketon und hat im Querschnitt betrachtet eine im Wesentlichen U-förmige Geometrie, wobei dessen beiden seitliche Schenkel den Oszillator umfassen. An der gegenüberliegenden Stirnfläche 5' ist der Oszillator 3 elastisch durch zwei Spiralfedern 10 abgestützt, wobei sich zwischen den Spiralfedern 10 und dem Oszillator 3 ein Halteelement 11 befindet. Die Spiralfedern 10 ihrerseits stützen sich am Gehäuse 2 ab. Neben der Verwendung von zwei Spiralfedern ist ebenso die Verwendung nur einer einzigen Spiralfeder oder eines Federelements mit anderer Geometrie denkbar. Darüber hinaus ist es möglich, anstatt einer Feder ein gummielastisches Federelement zu verwenden.

Das Halteelement 11 besitzt die gleiche Geometrie und Ausgestaltung wie das Führungselement 9, d.h. es ist ebenso aus tribologisch optimiertem Polyetheretherketon und hat im Querschnitt ein U-Profil, wobei auch hier die beiden Schenkel den Oszillator umgreifen und an seinen Hauptflächen 6, 6' kontaktieren. Weiterhin verfügt das Halteelement 11 über Aufnahmen zur Befestigung der Federelement 10.

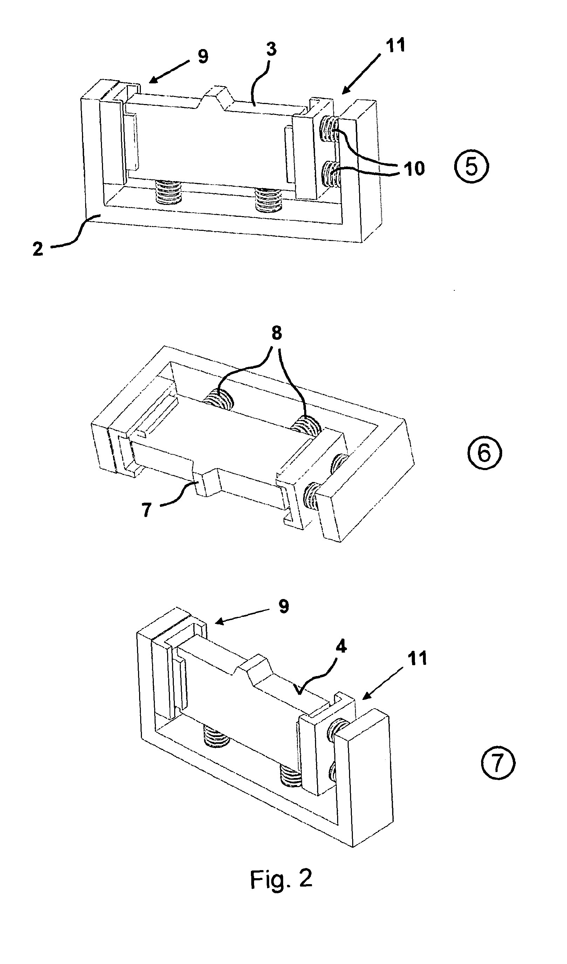

Fig. 2 zeigt in den Darstellungen 5 bis 7 eine weitere mögliche Ausführungsform des Ultraschallmotors 1. Um Wiederholungen zu vermeiden, wird im Folgenden nur auf die Unterschiede zu Fig. 1 eingegangen. Gemäß den Darstellungen 5 bis 7 der Fig. 2 ist sowohl das Führungselement 9, als auch das Halteelement 11 zweiteilig ausgeführt, wobei jeweils jedes der beiden Teile im Querschnitt eine U-förmige Geometrie aufweist. Das innere Teil des Führungselements 9, welches mit dem Oszillator 3 in Kontakt steht und diesen seitlich umgreift, ist dabei so ausgeführt, dass es von dem äußeren Teil aufgenommen werden kann, das sich in Anlage mit dem Gehäuse 2 befindet. Das innere Teil des Halteelements 11, welches in Kontakt mit dem Oszillator 3 steht, ist aufgenommen in dem äußeren Teil des Halteelements 11, welches sich in Anlage mit den Federelementen 10 befindet. Jeweils beide Teile von Führungselement und Halteelement sind aus tribologisch optimiertem Polyetheretherketon.

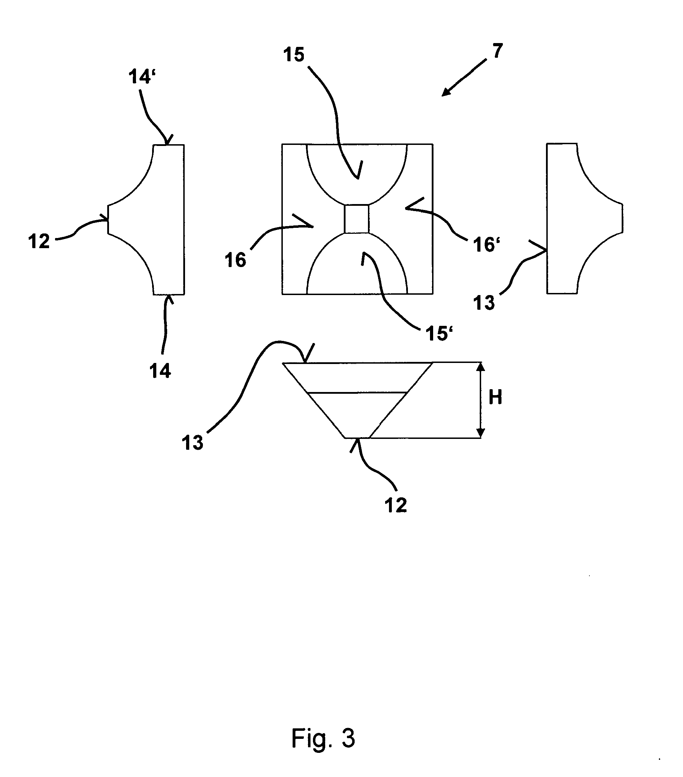

Fig. 3 zeigt eine mögliche Ausführungsform des Friktionselements des Ultraschallmotors. Hierbei weist das Friktionselement 7 die Grundfläche 13 auf, die sich in Kontakt mit dem Oszillator 3 befindet. Zudem besitzt das Friktionselement die Kontaktfläche 12, die zum Kontakt mit einem Abtriebselement vorgesehen ist. Die Kontaktfläche 12 ist wesentlich kleiner als die Grundfläche, das Verhältnis beträgt 1 zu 80. Von der Seite betrachtet, d.h. gemäß der in Darstellung 9 unteren Zeichnung, hat das Funktionselement 7 im Wesentlichen eine dreiecksförmige Geometrie mit einer Höhe H. Die Seitenflächen 16 und 16' sind eben und geneigt, und sie verjüngen sich von der Grundfläche 13 in Richtung der Kontaktfläche 12. Die Seitenflächen 15 und 15', die sich an die senkrechten Seitenflächen 14 und 14' anschließen, weisen eine konkave Krümmung auf. Auch sie verjüngen sich in Richtung der Kontaktfläche 12.

Nachfolgend wird die Funktionsweise des erfindungsgemäßen Ultraschallmotors näher erläutert.

Beim erfindungsgemäßen Ultraschallmotor erfolgt dessen Halterung dergestalt, dass sich eine seiner Stirnflächen im Wesentlichen starr abstützt bzw. diese starr unterstützt wird, und die entsprechend gegenüberliegende Stirnfläche elastisch unterstützt wird. Die starre Abstützung erfolgt hierbei über ein massives Führungselement, das bevorzugt aus einem polymeren Material und in besonders vorteilhafter Ausgestaltung aus einem thermoplastischen Kunststoff gefertigt ist. Das entsprechende Material besitzt einen hohen Druck-E-Modul, so dass es bei einer Kraftbelastung durch den sich im Betrieb deformierenden Oszillator auf das Führungselement zu keiner nennenswerten elastischen Deformation kommt, und daher die im Wesentlichen starre Abstützung resultiert. Zugleich erlaubt das Führungselement ein leichtes Gleiten gegenüber dem Gehäuse. Hierzu ist es insbesondere vorteilhaft, wenn dem Material des Führungselements gleitverbessernde Füllstoffe wie Polytetrafluorethylen oder Graphit beigemischt sind. Das besagte leichte Gleiten des Führungselements gegenüber dem Gehäuse erlaubt eine nahezu ungehemmte Bewegung des Oszillators in zur Seitenfläche paralleler Richtung. Dadurch wird u.a. erreicht, dass bei einem Verschleiß des Friktionselements und entsprechender Höhenabnahme desselben der gesamte Oszillator ungehindert in Verschleißrichtung nachrücken kann, so dass stets ein optimaler Angriff des Friktionselements am Abtriebselement stattfinden kann. Das beschriebene Nachrücken wird dabei über die an einer Seitenfläche angreifenden elastischen Elemente realisiert, die den Oszillator bzw. das an ihm angeordnete Friktionselement in Richtung des Abtriebselements drücken.

An der Stirnfläche des Oszillators, die der mit dem Führungselement in Kontakt befindlichen Stirnfläche gegenüberliegt, ist der Oszillator über ein Federelement oder mehrere Federelemente elastisch gelagert bzw. abgestützt. Das bedeutet, dass vom Oszillator durch dessen Betrieb auf die Federelemente wirkende Kräfte eine vergleichsweise hohe Deformation der Federelemente bewirken, wobei besagte Deformation reversibel und damit elastisch ist. Die Federelemente sind vorzugsweise derart gewählt, dass auch sie eine geringfügige Bewegung des Oszillators in Richtung des Friktionselements erlauben, so dass beispielsweise im Falle eines Verschleißes des Friktionselements das zuvor beschriebene Nachrücken des Oszillators nicht behindert wird. In bevorzugter Ausführungsform ist zwischen dem oder den Federelement bzw. Federelementen ein Halteelement angeordnet, dass zum Einen den Oszillator hält, und zum Anderen eine Aufnahme für das bzw. die Federelement/Federelemente besitzt.

Um beispielsweise das Reibverhalten und insbesondere die Führung des Oszillators in einer zu den Hauptflächen parallelen Ebene zu verbessern, ist es vorteilhaft, das Führungselement und das Halteelement zweiteilig auszuführen, wobei das dem Gehäuse zugewandte äußere Teil des Führungselements unverschiebbar mit diesem verbunden ist, und das dem Gehäuse zugewandte äußere Teil des Halteelements keine Verbindung mit dem Oszillator aufweist. In dem äußeren Teil des Führungselements und in dem äußeren Teil des Halteelements ist jeweils ein inneres Teil angeordnet, welches durch das äußere Teil bezüglich einer zu den Hauptflächen des Oszillators parallelen Ebene geführt ist. Das jeweils innere Teil hält dabei den Oszillator, wobei es ihn in bevorzugter Ausgestaltung seitlich umgreift. Inneres und äußeres Teil des Führungselements und des Halteelements sind tribologisch aufeinander abgestimmte Materialien, und bestehen vorzugsweise aus einem polymeren Material, und in besonders vorteilhafter Ausführungsform aus einem thermoplastischen Kunststoff, der mit die tribologischen Eigenschaften verbessernden Füllstoffen gefüllt sein kann. Durch die tribologische Abstimmung der Materialien von äußerem und innerem Teil des Führungselements bzw. Halteelements resultiert ein besonders günstiges Gleitverhalten, so dass die Bewegung des Oszillators in Richtung des Friktionselements bzw. in Richtung der elastischen Elemente nahezu ungehindert stattfinden kann.

Das zum Kontakt mit dem Abtriebselement vorgesehene Friktionselement kann in einer bevorzugten Ausführungsform eine spezielle Geometrie aufweisen. Diese Geometrie ist dabei so gewählt, dass die Kontaktfläche sehr klein gegenüber der Grundfläche des Friktionselementes ist, wobei die Kontaktfläche im Wesentlichen im Bereich der Dickenmitte der piezoelektrischen Platte des Oszillators liegt. Die nur äußerst geringe und mittig angeordnete Kontaktfläche bewirkt, dass während des Betriebs des Motors Kräfte in Richtung der Hauptflächen des Oszillators, hervorgerufen durch den Kontakt des Friktionselements mit dem Abtriebselement, weitestgehend vermieden werden. Dies resultiert daher, dass bei einer eventuellen Verkantung des Friktionselements mit dem Abtriebselement die Verkantung und damit eine äußerst hohe Flächenpressung im Bereich der Dickenmitte der piezoelektrischen Platte stattfindet, so dass nur sehr geringe Kräfte quer zur durch die Dickenmitte der piezoelektrischen Platte verlaufenden Ebene auftreten, welche die Effektivität des Motors negativ beeinflussen.

Zudem kann die Form des Friktionselements so gewählt sein, dass sich die Kontaktfläche bei Verschleiß des Friktionselements zumindest bis zu einer Höhenabnahme von 10% nur unwesentlich ändert, d.h. größer wird. Hierzu weist das Friktionselement sich zur Kontaktfläche hin verjüngende Seitenflächen auf, wobei zumindest zwei der Seitenflächen eine konkave Krümmung aufweisen. Kommt es während des Betriebs des Ultraschallmotors zu einem Verschleiß des Friktionselements, so bewirkt die spezielle Geometrie des Friktionselements, dass die Kontaktfläche nahezu gleich bleibt, so dass der Motor auch bei auftretendem Verschleiß am Friktionselement ohne signifikante Änderungen in seinem Betriebsverhalten bzw. seiner Funktion verwendet werden kann.

## Patentansprüche

1. Ultraschallmotor (1) mit einem Gehäuse (2) und zumindest einem in dem Gehäuse angeordneten Oszillator (3) in Form einer piezoelektrischen Platte mit wenigstens zwei Seitenflächen (4, 4'), wenigstens zwei Stirnflächen (5, 5') und wenigstens zwei Hauptflächen (6, 6'), wobei an einer der Seitenflächen (4) des Oszillators (3) mindestens ein Friktionselement (7) zum Bewegen eines Abtriebselements und an der gegenüberliegenden Seitenfläche (4') zwischen dem Gehäuse (2) und dem Oszillator (3) wenigstens ein elastisches Element (8) zum elastischen Anpressen des mindestens einen Friktionselements (7) an das Abtriebselement angeordnet ist,
**dadurch gekennzeichnet, dass**
sich der Oszillator (3) an einer seiner Stirnflächen (5) über ein Führungselement (9) starr am Gehäuse (2) abstützt, und sich der Oszillator (3) an der gegenüberliegenden Stirnfläche (5') über wenigstens ein Federelement (10) elastisch am Gehäuse (2) abstützt.

2. Ultraschallmotor nach Anspruch 1, **dadurch gekennzeichnet, dass** das Führungselement (9) gleitend gegenüber dem Gehäuse (2) angeordnet ist.

3. Ultraschallmotor nach zumindest einem der vorangegangenen Ansprüche, **dadurch gekennzeichnet, dass** das Führungselement (9) den Oszillator (3) zumindest teilweise umgreift.

4. Ultraschallmotor nach zumindest einem der vorangegangenen Ansprüche, **dadurch gekennzeichnet, dass** das Führungselement (9) einteilig oder mehrteilig ist.

5. Ultraschallmotor nach zumindest einem der vorangegangenen Ansprüche, **dadurch gekennzeichnet, dass** das Führungselement (9) einteilig ist und eine im Wesentlichen U-förmige Querschnittsgeometrie aufweist.

6. Ultraschallmotor nach zumindest einem der vorangegangenen Ansprüche, **dadurch gekennzeichnet, dass** das Führungselement (9) zweiteilig ist, und jedes der beiden Teile des Führungselements (9) eine im Wesentlichen U-förmige Querschnittsgeometrie aufweist.

7. Ultraschallmotor nach zumindest einem der vorangegangenen Ansprüche, **dadurch gekennzeichnet, dass** sich zwischen dem wenigstens einen Federelement (10) und dem Oszillator (3) ein Halteelement (11) befindet.

8. Ultraschallmotor nach zumindest einem der vorangegangenen Ansprüche, **dadurch gekennzeichnet, dass** das Halteelement (11) einteilig oder mehrteilig ist.

9. Ultraschallmotor nach zumindest einem der vorangegangenen Ansprüche, **dadurch gekennzeichnet, dass** das Führungselement (9) und das Halteelement (11) einstückig miteinander ausgebildet sind.

10. Ultraschallmotor nach zumindest einem der vorangegangenen Ansprüche, **dadurch gekennzeichnet, dass** das Führungselement (9) und/oder das Halteelement (11) einen polymeren Werkstoff, vorzugsweise einen thermoplastischen Kunststoff, aufweisen bzw. aufweist.

11. Ultraschallmotor nach zumindest einem der vorangegangenen Ansprüche, **dadurch gekennzeichnet, dass** das Verhältnis von der zum Kontakt mit dem Abtriebselement vorgesehenen Kontaktfläche (12) zur Grundfläche (13) des mindestens einen Friktionselements (7) kleiner oder gleich 1:50 ist.

12. Ultraschallmotor nach zumindest einem der vorangegangenen Ansprüche, **dadurch gekennzeichnet, dass** die Kontaktfläche (12) bis zu einer durch den Betrieb bedingten Abnahme der Höhe H des mindestens einen Friktionselements (7) von 10% im Wesentlichen gleich bleibt.

13. Ultraschallmotor nach zumindest einem der vorangegangenen Ansprüche, **dadurch gekennzeichnet, dass** das mindestens eine Friktionselement (7) wenigstens zwei konkav gekrümmte Seitenflächen (15, 15') aufweist.

14. Ultraschallmotor nach zumindest einem der vorangegangenen Ansprüche, **dadurch gekennzeichnet, dass** sich die wenigstens zwei konkav gekrümmten Seitenflächen (15, 15') in Richtung der Kontaktfläche (12) zumindest abschnittsweise stetig verjüngen.

15. Ultraschallmotor nach zumindest einem der vorangegangenen Ansprüche, **dadurch gekennzeichnet, dass** das mindestens eine Friktionselement zwei im Wesentlichen senkrechte ebene Seitenflächen (14, 14'), zwei geneigte ebene Seitenflächen (16, 16') und zwei konkav gekrümmte Seitenflächen (15, 15') aufweist.
